# FASCICULE DE BREVET EUROPEEN

(11) **EP 0 800 251 B1**
(45) Date de publication et mention de la délivrance du brevet: **07.01.2004**
(21) Numéro de dépôt: 97400556.3
(22) Date de dépôt: 13.03.1997
(51) Int. Cl.: H02H 7/04

(54) **Système de protection d'un transformateur de distribution triphasé à isolation dans un diélectrique liquide**
Schutzsystem für einen Dreiphasenverteiltransformator mit einer durch ein dielektrisches Fluidum unterstützten Isolierung
Protection for a three-phase distribution transformer immersed in a dielectric fluid

(30) Priorité: 04.04.1996 FR 9604248
(43) Date de publication de la demande: 08.10.1997
(73) Titulaire: Alstom T & D SA, 75116 Paris (FR)
(72) Inventeur: de Sedouy, Thomas, 27310 Saint Ouen de Thouberville (FR); Folliot, Philippe, 76350 Oissel (FR)
(74) Mandataire: de Lambilly Delorme, Marie Pierre

(56) Documents cités:
- EP-A- 0 653 765
- DE-A- 3 927 564
- US-A- 4 002 949

## Description

La présente invention concerne un système de protection d'un transformateur de distribution triphasé à isolation dans un diélectrique liquide.

Plus particulièrement, l'invention s'applique aux transformateurs de distribution situés dans des réseaux à régime de neutre compensé, c'est-à-dire dans lequel le point neutre du secondaire, monté en étoile, du transformateur du poste source est relié à la terre par l'intermédiaire d'une réactance L accordée aux capacités du réseau, de telle sorte qu'en présence d'un défaut à la terre, le courant dans le défaut est théoriquement nul.

Dans les transformateurs de distribution à diélectrique liquide, en cas de défaut, il y a un risque d'échauffement du diélectrique provoquant une surpression pouvant atteindre une valeur telle qu'il explose avec les graves conséquences pour l'environnement dues aux projections du diélectrique.

Le brevet français n° 2 629 955 décrit un dispositif de protection d'un transformateur triphasé immergé dans un liquide diélectrique contre un défaut consistant en une baisse de niveau du liquide diélectrique à une valeur déterminée.

Le dispositif consiste en ce que chaque phase, côté haute tension, est équipée d'un fusible de limitation d'intensité et en ce qu'un flotteur vient, en cas de baisse de niveau du diélectrique, établir un court-circuit franc entre un point de chaque phase situé entre les fusibles et les enroulements du transformateur, et un quatrième contact relié à la masse du transformateur.

Cependant, avec un réseau à régime de neutre compensé, comme dit plus haut, un tel dispositif n'est pas satisfaisant. En effet, en cas d'apparition du défaut (baisse du niveau à une hauteur telle que le flotteur établit le contact entre les quatre points), on aura un court-circuit triphasé relié à la terre par l'intermédiaire du contact à la masse et seuls deux fusibles couperont et le courant passera entre la troisième phase non coupée et la terre avec une intensité trop faible, compte tenu du régime de neutre compensé, pour faire fonctionner le troisième fusible mais suffisamment importante pour provoquer, soit un échauffement du liquide diélectrique, faire monter la pression et exploser la cuve, soit un déclenchement du poste source.

Le document US 4002949 décrit un système de protection suivant la préambule de la revendication 1.

La présente invention a ainsi pour but de proposer un système sûr et fonctionnant parfaitement dans un réseau à régime de neutre compensé ou non.

Ce but est réalisé par un système de potection selon la revendication 1.

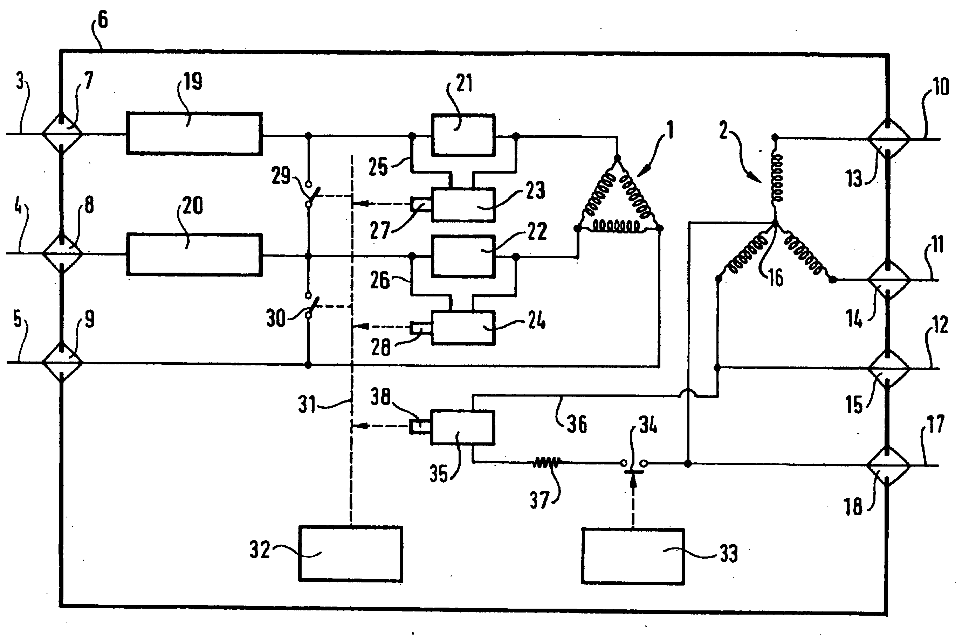

On va maintenant donner la description d'un exemple de mise en oeuvre de l'invention en se reportant au dessin annexé dans lequel :

La figure unique est un schéma représentant un transformateur de distribution triphasé à isolation dans un diélectrique liquide, équipé du système de protection selon l'invention.

Il s'agit par exemple d'un transformateur 20 K volts-410 volts.

On a figuré en 1 l'enroulement haute tension en triangle et en 2 l'enroulement basse tension en étoile. L'enroulement haute tension 1 est alimenté par les trois phases 3, 4 et 5 qui pénètrent dans la cuve du transformateur, schématiquement représentée par un rectangle 6, par des traversées isolantes 7, 8 et 9.

L'enroulement basse tension 2 alimente les lignes de phases 10, 11 et 12 en traversant la cuve 6 par des traversées isolantes 13, 14 et 15 et de même, le point neutre 16 est relié à un conducteur neutre 17 traversant la cuve par une traversée isolante 18.

Côté haute tension, deux des trois phases, ici les phases repérées 3 et 4 sont reliées à l'enroulement haute tension 1 par l'intermédiaire d'un fusible limiteur de courant respectivement 19 et 20, tandis qu'aucun fusible n'équipe la troisième phase repérée 5. Ces fusibles fonctionnent normalement au dessus d'une valeur d'intensité qu'on appellera intensité de coupure I_{C}, par exemple de 60 ampères. Au dessous de cette valeur, il existe une zone d'intensité critique pour laquelle le fusible s'échauffe, se dégrade et coupe mal, par exempte entre 36 et 60 ampères. Selon l'invention, afin de protéger ces fusibles contre un mauvais fonctionnement dans cette zone d'intensité critique, chaque fusible limiteur de courant 19, 20 est associé en série à un micro-fusible, respectivement 21 et 22 plus rapide que le fusible limiteur de courant et constitué chacun par une courte lame d'argent encochée. Son rôle est d'obtenir une fusion en fond d'encoche pour de faibles courants de défaut, dans la zone d'intensité critique du fusible limiteur de courant, avec une bonne précision. Chaque micro-fusible est associé à un percuteur respectivement 23 et 24.

Un tel percuteur est connu en soi, il est constitué d'un doigt poussé par un ressort maintenu bandé par un fil d'acier. Le fil d'acier, figuré en 25, 26, est branché en parallèle sur le micro-fusible 21, 22. Le fil d'acier du percuteur a une résistance électrique beaucoup plus élevée que celle de la lame d'argent du micro-fusible, de telle sorte qu'en fonctionnement normal, le courant passe dans la lame d'argent évitant le vieillissement du fil d'acier. En cas de surintensité, dans la zone calibrée correspondant à ladite zone critique, la lame d'argent fond, d'où l'apparition d'un arc électrique augmentant la tension aux bornes du micro-fusible et déviant le courant vers le fil d'acier qui fond lui aussi libérant le doigt 27, 28 du percuteur. C'est le fonctionnement classique d'un fusible à percuteur.

La libération du doigt d'un percuteur commande la fermeture d'un court-circuiteur triphasé 29, 30. Cette commande est assurée par l'intermédiaire d'un système mécanique de déclenchement quelconque et est figurée par le tracé 31 en traits discontinus. Le système comporte en outre un détecteur de pression 32 qui commande également le court-circuiteur 29-30 en cas de pression du diélectrique dépassant la valeur de réglage du capteur. Un détecteur de niveau 33 complète également le dispositif de protection.

En cas de baisse de niveau au dessous d'une valeur donnée, le détecteur 33, constitué par exemple par un simple flotteur, effectue la fermeture d'un contact 34 fermant un circuit comprenant un percuteur 35 dont le fil d'acier 36 est branché entre le point neutre 16 et une phase 12. Une résistance de limitation 37 est insérée dans le circuit si nécessaire. La fermeture du contact 34 fait circuler dans ce circuit un courant qui fait fondre le fil d'acier 36 du percuteur 35 libérant son doigt 38 et provoquant la fermeture du court-circuiteur triphasé 29, 30.

Ainsi, en cas d'apparition d'un défaut, tel qu'une surintensité, une surpression ou une fuite de diélectrique entraînant une baisse de niveau d'une valeur déterminée, on provoque un court-circuit franc entre les trois phases haute tension 3, 4 et 5, en un point situé entre les fusibles 19, 20 et l'enroulement haute tension 1, ce qui provoque immédiatement la coupure des fusibles 19 et 20.

Les micro-fusibles 21 et 22 n'ont pas de pouvoir de coupure et ne servent qu'à transformer une surintensité en action mécanique, par le percuteur 23, 24 afin d'assurer la fermeture du court-circuiteur 29, 30 pour faire fonctionner les fusibles 19, 20 qui ont, eux, un pouvoir de coupure. La troisième phase 5, non coupée reste sous tension, mais n'est parcourue par aucun courant, car il n'y a plus de retour possible par les phases 4 et 6 coupées.

Dans ce transformateur, toute la partie haute tension est sur-isolée par rapport à la basse tension et par rapport à la cuve. On entend par là que, si pour les autres appareillages du réseau l'isolation est faite pour tenir x k volts par rapport à la masse, ici, l'isolation sera conçue pour tenir une tension supérieure.

## Revendications

1. "Système de protection d'un transformateur de distribution triphasé immergé dans un diélectrique liquide contenu dans une cuve (6), le transformateur ayant des enroulements haute tension (1) qui sont alimentés par trois phases (3, 4, 5) isolés par rapport à la cuve, comportant des fusibles limiteurs de courant (19, 20) disposés de telle sorte qu'au moins deux (3, 4) des trois phases (3, 4, 5) sont reliées aux enroulements haute tension (1) par l'intermédiaire d'un dit fusible limiteur de courant (19, 20), comportant un court-circuiteur triphasé (29, 30) situé sur la haute tension entre lesdits fusibles limiteurs de courant (19, 20) et les enroulements haute tension (1),
**caractérisé en ce qu'**en série sur chacune des deux phases (3, 4) équipées d'un dit fusible limiteur de courant (19, 20) est disposé un micro-fusible (21, 22) de protection plus rapide que le fusible limiteur de courant, le micro-fusible étant associé à un percuteur (23, 24), le système de protection comporte au moins un moyen de détection de défaut (32, 33) concernant au moins l'un des deux points suivant: la pression dans la cuve et le niveau du diélectrique, le court circuiteur est disposé entre les trois phases haute tension (3, 4, 5) ce qui provoque un court circuit franc entre ces trois phases haute tension (3, 4, 5) en un point situé entre lesdits fusibles limiteur de courant (19., 20) et les enroulements haute tension (1), et ledit court-circuiteur est commandé par ledit moyen (32, 33) de détection de défaut, et également par le percuteur (23, 24) en cas de fonctionnement du micro-fusible (21, 22)."

## Patentansprüche

1. System zum Schutz eines dreiphasigen Verteilertransformators, der in eine in einem Tank (6) enthaltene dielektrische Flüssigkeit eingetaucht ist, wobei der Transformator Hochspannungswicklungen (1) besitzt, die über drei Phasen (3, 4, 5) versorgt werden, die von dem Tank isoliert sind und Strombegrenzungs-Schmelzsicherungen (19, 20) aufweisen, die in der Weise angeordnet sind, dass wenigstens zwei (3, 4) der drei Phasen (3, 4, 5) mit den Hochspannungswicklungen (1) über eine Strombegrenzungs-Schmelzsicherung (19, 20) verbunden sind, umfassend eine dreiphasige Kurzschlussvorrichtung (29, 30), die zwischen den Strombegrenzungs-Schmelzsicherungen (19, 20) und den Hochspannungswicklungen (1) auf der Hochspannung liegt,
**dadurch gekennzeichnet, dass** in Reihe mit jeder der zwei mit einer Strombegrenzungs-Schmelzsicherung (19, 20) ausgerüsteten Phasen (3, 4) eine Schutz-Mikroschmelzsicherung (21, 22), die schneller als die Strombegrenzungs-Schmelzsicherung ist, angeordnet ist, wobei der Mikroschmelzsicherung ein Schlagstift (23, 24) zugeordnet ist, wobei das Schutzsystem wenigstens ein Mittel (32, 33) für die Erfassung eines Fehlers in Bezug auf wenigstens einen der beiden folgenden Punkte umfasst: Druck in dem Tank und Pegel des Dielektrikums;
wobei die Kurzschlussvorrichtung zwischen den drei Hochspannungsphasen (3, 4, 5) angeordnet ist, wodurch ein satter Kurzschluss zwischen diesen drei Hochspannungsphasen (3, 4, 5) an einem Punkt, der zwischen den Strombegrenzungs-Schmelzsicherungen (19, 20) und den Hochspannungswicklungen (1) liegt, hervorgerufen wird und wobei die Kurzschlussvorrichtung durch das Fehlererfassungsmittel (32, 33) und bei einer Auslösung der Mikroschmelzsicherung (21, 22) außerdem durch den Schlagstift (23, 24) gesteuert wird.

## Claims

1. A protection system for a three-phase distribution transformer immersed in a liquid dielectric contained in a tank (6), the transformer having high voltage windings (1) which are powered by three phases (3, 4, 5) that are insulated from the tank, the system including current-limiting fuses (19, 20) disposed in such a manner that at least two (3, 4) of the three phases (3, 4, 5) are connected to the high voltage windings (1) by means of a respective one of said current-limiting fuses (19, 20), the system including a three-phase short-circuiting device (29, 30) situated on the high voltage between said current-limiting fuses (19, 20) and the high voltage windings (1),
the system being **characterized in that** in each of the two phases (3, 4) equipped with one of said current-limiting fuses (19, 20), there is connected in series a protective micro-fuse (21, 22), which operates faster than the current-limiting fuse, the micro-fuse being associated with a striker (23, 24), the system including at least one fault detection means (32, 33) concerning at least one of the two following points: pressure in the tank, and level of the dielectric, the short-circuiting device is disposed between the three high voltage phases (3, 4, 5), thereby causing an outright short circuit between the three high voltage phases (3, 4, 5) at a point situated between said current-limiting fuses (19, 20) and the high voltage windings (1), and said short-circuiting device is controlled by said fault detection means (32, 33), and also by the striker (23, 24) in the event of the micro-fuse (21, 22) operating.
